# EUROPÄISCHE PATENTANMELDUNG

(11) **EP 2 530 360 A1**
(43) Veröffentlichungstag der Anmeldung: **05.12.2012**
(21) Anmeldenummer: 12003137.2
(22) Anmeldetag: 02.05.2012
(51) Int. Cl.: F16H 55/50, F16H 55/48, F16H 57/04

(54) **Seilrolle und Kran oder Bagger mit der Seilrolle**

(30) Priorität: 30.05.2011 DE 102011102801; 21.07.2011 DE 102011108230
(71) Anmelder: Liebherr-Werk Nenzing Ges.m.b.H, 6710 Nenzing (AT)
(72) Erfinder: Wagishauser, Patricia, 1630 Bulle (CH); Streitz, Holger, Dipl.-Ing., 6713 Ludesch (AT)
(74) Vertreter: Laufhütte, Dieter

(57) **Zusammenfassung**

Die vorliegende Erfindung betrifft eine Seilrolle (1) mit einer umfänglich verlaufenden Rille (21) zur Führung eines Seils, wobei die Seilrolle modular aufgebaut ist und einen radförmigen Trägerkörper (10) sowie einen ringförmigen Rillenkörper (20) aufweist, wobei der Trägerkörper (10) wenigstens abschnittsweise aus einem Compositmaterial, vorzugsweise einem faserverstärkten Kunststoff besteht, und wobei der Rillenkörper (20) den Trägerkörper (10) umfänglich umgibt und die Rille (21) aufweist.

## Beschreibung

Die Erfindung betrifft eine Seilrolle mit einer umfänglich verlaufenden Rille zur Führung eines Seils, die Verwendung einer Seilrolle in einem Kran oder einem Bagger, sowie einen Kran oder einen Bagger mit wenigstens einer Seilrolle.

Seilrollen haben eine radförmige Gestalt und sind in ihrem Einsatzzustand um ihre zentrale Achse drehbar gelagert. Umfänglich besitzen sie eine genormte Rille mit einem Rillengrund zur Führung eines Seils. Sie werden im Stand der Technik verwendet, um bei der Umlenkung der Zugrichtung von Seilen Kraftverluste oder Beschädigungen zu minimieren. Anwendungen von Seilrollen umfassen unter anderem den Einsatz bei der Führung von Hubseilen und Einziehseilen in Kränen und Baggern. Dabei werden oftmals zur Führung von mehreren Abschnitten eines mehrfach umgelenkten Seils, beispielsweise zu Ausbildung eines Flaschenzugs, oder auch zu Führung von zwei oder mehreren parallel laufenden Seilen mehrere Seilrollen zu einem Rollenblock zusammengefasst.

Bekannte Seilrollen sind typischerweise einteilig gefertigt und bestehen aus Metall oder Kunststoff, beispielsweise aus PA 6G (Gusspolyamid) oder gegossenem, geschmiedeten und/oder geschweißtem Stahl. Diese bekannten Seilrollen haben beispielsweise den Nachteil, dass massiv gefertigte Kunststoffrollen und insbesondere Rollen aus Stahl ein hohes Gewicht aufweisen. Materialeinsparungen und damit einhergehende Gewichtseinsparungen würden dabei zu Lasten der Stabilität der Seilrolle gehen, was ebenfalls unerwünscht ist. Ebenso ist eine komplizierte Fertigung aus Kostengründen unerwünscht.

Der Einsatz von steifen Materialien wie faserverstärkten Kunststoffen ist hier ebenfalls problematisch, da diese Materialien durch den reibenden Kontakt mit stark gespannten Stahlseilen schnell beschädigt oder zerstört werden.

Ziel der Erfindung ist es, eine konstruktiv einfach gebaute Seilrolle bereitzustellen, mit der eine Gewichtsreduktion erreicht werden kann ohne Einbußen in der Stabilität und Langlebigkeit hinnehmen zu müssen.

Dieses Ziel wird mit einer Seilrolle gemäß Anspruch 1 gelöst. Vorteilhafte Ausgestaltungen ergeben sich aus den Unteransprüchen.

So ist erfindungsgemäß eine Seilrolle mit einer radförmigen Gestalt und einer umgänglich verlaufenden Rille zur Führung eines Seils vorgesehen. Die Seilrolle ist modular aufgebaut und weist einen radförmigen Trägerkörper sowie einen ringförmigen Rillenkörper auf. Der Trägerkörper ist dabei wenigstens abschnittsweise aus einem Compositmaterial gefertigt. Der Rillenkörper umgibt den radförmigen Trägerkörper umfänglich und weist an dessen Außenseite, d. h. an der vom Trägerkörper abgewandten Seite die Rille zur Führung des Seils auf.

Durch die Materialeigenschaften der Compositmaterialien kann eine wesentliche Gewichtsreduktion bei gleichbleibender oder sogar erhöhter Stabilität und Steifigkeit erreicht werden. Durch den modularen Aufbau des Trägerkörpers wird der sinnvolle Einsatz dieser Materialien gewährleistet. So steht das Compositmaterial des Trägerkörpers nicht direkt mit dem geführten Seil in Verbindung und kann daher nicht beschädigt und abgenutzt werden. Dies ist insbesondere deshalb wichtig, da Compositmaterialien wie faserverstärkte Kunststoffe durch Schläge, Abrasion und dergleichen relativ einfach beschädigt werden.

In einer Ausführungsform besteht die erfindungsgemäße Seilrolle aus dem Trägerkörper und dem Rillenkörper, so dass ein zweiteiliger Aufbau aus dem Trägerkörper und dem Rillenkörper vorliegt.

In einer Ausführungsform ist die Rille zur Führung des Seils eine wannenförmige Ausnehmung, deren Boden durch einen sogenannten Rillengrund gebildet wird. Die Ausprägung der Rille ist typischerweise genormt. Alternativ oder zusätzlich kann die Rille auch erhabene Strukturen aufweisen oder daraus bestehen, wie beispielsweise umfänglich durchgehende Leisten oder vereinzelte und über den Umfang verteilte Rippen, die an den Rändern der Umfangsfläche verlaufen und zwischen welchen ein Seil aufgenommen werden kann, sodass ein seitliches Abrutschen verhindert wird.

In einer Ausführungsform ist die erfindungsgemäße Seilrolle rund, wobei der Trägerkörper eine runde, radförmige Gestalt aufweist und der Rillenkörper die Gestalt eines kreisförmigen Rings annimmt.

Der Begriff *"radförmige Gestalt"* soll bedeuten, dass das bezeichnete Objekt die Form eines gegebenenfalls runden Zylinders hat, dessen Höhe im Verhältnis zum Radius klein ist beziehungsweise dessen Höhe kleiner als dessen Radius ist. Der Begriff *"Umfangsfläche"* bezeichnet die Manteloberfläche dieses Zylinders. *"Umfang"* beziehungsweise *"umfänglich"* bezeichnen die Kontur der Umfangsfläche, einen Verlauf auf und entlang der Umfangsfläche, oder ein Anliegen an und entlang der Umfangsfläche. Unter einem *"Seil"* ist in der Darstellung dieser Erfindung jedes längliche, im Wesentlichen biegeschlaffe Element zur Übertragung von Zugkräften zu verstehen.

In einer Ausführungsform ist die radiale Ausdehnung des ringförmigen Rillenkörpers im Verhältnis zur radialen Ausdehnung des radförmigen Trägerkörpers an der Seilrolle klein und umfasst beispielsweise weniger als 20 % oder weniger als 10% der radialen Ausdehnung der Seilrolle.

In einer Ausführungsform umfasst die Faserverstärkung eine Glasfaserverstärkung und/oder eine Kohlefaserverstärkung und/oder eine Aramidfaserverstärkung oder besteht daraus. Besonders bevorzugt ist der Einsatz einer Kohlefaserverstärkung.

In einer Ausführungsform sind der Trägerkörper und der Rillenkörper aus zwei unterschiedlichen Materialien gefertigt.

In einer Ausführungsform besteht der Trägerkörper zur Gänze aus dem Compositmaterial und ist vorzugsweise einteilig daraus gefertigt. Dies entspricht einem einzelligen beziehungsweise monoitischen Aufbau. Unter diese Ausführungsform fallen auch solche Bauarten, wobei der Trägerkörper im Wesentlichen aus dem Compositmaterial besteht, jedoch einzelne Bauteile wie Nuten, Führungen, Schrauben und dergleichen aus einem anderen Material gefertigt sind. Maßgeblich ist vielmehr die Fertigung aller wesentlichen Strukturelemente aus dem Compositmaterial. Beispiele für eine ganzheitliche Fertigung des Trägerkörpers aus dem Compositmaterial umfassen eine Hohlkammerkonstruktion, eine Flächentragwerkkonstruktion aus zwei oder mehreren parallelen Scheiben, eine Fachwerkkonstruktion oder Kombinationen daraus. Eine Ausführungsform eines Trägerkörpers, der zur Gänze aus dem Kompositmaterial besteht, umfasst eine Konstruktion, in der der Trägerkörper eine gewellte Scheibe umfasst beziehungsweise im Wesentlichen daraus besteht, wobei die Wellen bzw. Krümmungen radial verlaufen. Die Scheibe ist dabei vorzugsweise stark gewellt, d.h. die Amplitude der Wellen ist am halben Radius wenigstens gleich groß wie deren Wellenlänge.

In einer Ausführungsform ist der Trägerkörper heterogen beziehungsweise mehrzellig gefertigt, wobei wenigstens ein Teil der tragenden Strukturelemente und/oder das Grundgerüst des Trägerkörpers aus dem Compositmaterial bestehen.

In einer Ausführungsform umfasst der Trägerkörper wenigstens zwei parallel angeordnete Scheiben aus dem Compositmaterial. Diese können beispielsweise einen Kern aus einem anderen Material sandwichartig begrenzen, so dass der Trägerkörper eine Sandwichkonstruktion aufweist. Besonders bevorzugt ist eine Ausführungsform, wobei genau zwei Scheiben einen Kern begrenzen, der nicht aus dem Compositmaterial gefertigt ist. Der Kern kann die Funktion eines Schubkerns haben, d.h. eine schubsteife Verbindung der einzelnen Scheiben bewirken. Der Kern kann ferner als Abstandshalter in der Produktion und/oder während dem Betrieb dienen.

Alternativ oder zusätzlich können eine oder mehrere der Scheiben aus Compositmaterial in einem Mantel aus einem anderen Material eingefasst sein. Der Mantel kann die Scheiben in Position halten, zusätzliche Stabilität verleihen und die Scheiben gegen Schläge, Witterungseinflüsse und andere mechanische Einflüsse von außen schützen.

In einer Ausführungsform besteht der Kern und/oder der Mantel aus einem Schaummaterial, insbesondere aus einem geschäumten Kunststoffmaterial, einem Al/Kunststoff Materialverbund, oder einem anderen Kunststoffmaterial. Durch geschickte Materialwahl kann sichergestellt werden, dass der Kern beziehungsweise Mantel kaum zusätzliches Gewicht verursacht, da eine Grundstabilität im Wesentlichen bereits durch das Compositmaterial gegeben ist und die Aufnahme der Normalspannung im Wesentlichen durch die Scheiben erfolgt. Schaummaterialien haben insbesondere den Vorteil einer vergleichsweise geringen Dichte.

In einer Ausführungsform weist wenigstens eine der parallel angeordneten Scheiben radial verlaufende Hohlspeichen auf. Diese können aus der Scheibe ausgeformt sein. In den Bereichen zwischen den Hohlspeichen können gegebenenfalls Aussparungen in den Scheiben vorhanden sein. Vorzugsweise weisen zwei oder alle Scheiben Hohlspeichen auf. Die Hohlspeichen können beispielsweise in Umfangsrichtung symmetrisch auf der Scheibe verteilt sein. Alternativ oder zusätzlich können die Scheiben auch eine in radialer Richtung gewölbte Struktur aufweisen.

In einer Ausführungsform besteht der Rillenkörper aus Metall oder Kunststoff. Kunststoff ist durch sein vergleichsweise geringeres Gewicht bevorzugt. Beispiele umfassen Polyamid oder POM. Der Rillenkörper ist dabei vorzugsweise nicht faserverstärkt.

Die Scheiben des Trägerkörpers können an deren Außenseite und/oder an deren Innenseite in einem Obergurt und/oder einem Untergurt aufgenommen sein, der aus Kunststoff, Metall oder ebenfalls aus Compositmaterial besteht. Die Materialwahl kann entsprechend der Materialwahl für die Scheiben beziehungsweise den Rillenkörper erfolgen.

In einer Ausführungsform weist der Trägerkörper umfänglich eine Aufnahme für den Rillenkörper auf. Dabei kann es sich beispielsweise um eine wannenförmige Ausnehmung handeln. Jedoch sind auch erhabene Strukturen wie umfänglich durchgehende Leisten oder über den Umfang verteilte Rippen beziehungsweise Stege denkbar, die an den Rändern der Umfangsfläche verlaufen und zwischen denen der Rillenkörper aufgenommen werden kann. Die Aufnahme kann in einer Ausführungsform am Obergurt des Trägerkörpers ausgebildet sein. Beispielsweise ist denkbar, dass die umfänglich verlaufenden oder verteilten Stege beziehungsweise Rippen einen integral gefertigten Fortsatz der Scheiben darstellen und der Boden der Ausnehmung durch den Obergurt ausgebildet wird.

In einer Ausführungsform ist der Rillenkörper im Querschnitt im Wesentlichen sichelförmig. Von dieser Begrifflichkeit sollen V-förmige, U-förmige und andere Querschnitte umfasst sein, wobei eine Fläche von einer stark konvexen Linie und einer weniger stark konkaven Linie eingeschlossen wird. Die konkave Linie korrespondiert dabei zur Rille zur Führung eines Seils an der Außenseite des Rillenkörpers, und die konvexe Linie zur Innenseite des Rillenkörpers, die vorzugsweise formschlüssig in die Aufnahme des Trägerkörpers passt.

In einer Ausführungsform sind der Rillenkörper und der Trägerkörper innerhalb der Seilrolle ortsfest zueinander angeordnet, d. h. nicht gegeneinander bewegbar oder verschiebbar. Dies kann vorzugsweise durch eine formschlüssige Verbindung erfolgen. Zu diesem Zweck kann der Innenradius des ringförmigen Rillenkörpers im Wesentlichen dem Außenradius des radförmigen Trägerkörpers entsprechen.

In dieser Ausführungsform werden Kräfte über Formschluss zwischen den Rillenkörper und dem Trägerkörper übertragen. Ein Formschluss kann gegenüber einem Kraftschluss beispielsweise durch unterschiedliche thermische Ausdehnungskoeffizienten der für den Trägerkörper und der für den Rillenkörper verwendeten Materialien vorteilhaft sein. Der Formschluss kann beispielsweise durch ineinandergreifende Vertiefungen und Erhebungen am Rillenkörper und Trägerkörper, beispielsweise durch Bohrungen und Zapfen beziehungsweise Stifte erreicht werden. Diese Strukturelemente befinden sich vorzugsweise an der inneren Umfangsfläche des Rillenkörpers und der äußeren Umfangsfläche des Trägerkörpers, beziehungsweise, falls vorhanden, innerhalb der Aufnahme des Trägerkörpers (beispielsweise innerhalb der Vertiefung oder an den Leisten, Rippen oder Stegen).

Alternativ oder zusätzlich zum Formschluss kann auch ein Kraftschluss wie ein Reibschluss oder eine adhäsive Verbindung die Ortsfestigkeit des Trägerköpers und des Rillenkörpers zueinander sicherstellen.

In einer Ausführungsform weist der Rillenkörper einen Innenradius auf, der kleiner ist als der Außenradius des Trägerkörpers beziehungsweise der Aufnahme innerhalb des Trägerkörpers (Ränder der Vertiefung beziehungsweise Leisten, Ripper und dergleichen). Der Rillenkörper stellt so eine verlorene Form dar und wird, was die seitliche Fixierung betrifft, allein durch Formschluss an dem Trägerkörper gehalten. Der Rillenkörper kann so nicht demontierbar und dauerhaft in den Trägerkörper integriert sein. Dies wird beispielsweise durch Integralbauweise bei der Konstruktion erreicht, wobei beispielsweise der Rillenkörper bereitgestellt wird und bei der Herstellung der Seilrolle im Kompositmaterial eingefasst wird. Die Herstellung des Compositmaterials kann dabei unter anderem durch Lamination, Nasspressen, Spritzpressen und dergleichen erfolgen. Eine zusätzliche Fixierung durch Klammern, Schrauben, Stifte und dergleichen ist nicht notwenig, wodurch der Aufbau des erfindungsgemäßen Rillenkörpers wesentlich vereinfacht ist.

Im Einsatzzustand ist eine erfindungsgemäße Seilrolle typischerweise drehbar gelagert. Zu diesem Zweck kann die Seilrolle in einer Ausführungsform so ausgebildet sein, dass der Trägerkörper entlang dessen Drehachse eine Bohrung aufweist, in der ein Drehlager anbringbar beziehungsweise angebracht ist. Die Bohrung befindet sich dabei im Zentrum des Trägerkörpers, beispielsweise, sofern der Trägerkörper kreisförmig ist, im Kreismittelpunkt. Das Drehlager kann als Wälzlager oder Gleitlager ausgebildet sein. Es kann direkt oder über einen Zwischenring mit dem Trägerkörper in Verbindung stehen. Auch hier ist ein Formschluss und/oder ein Kraftschluss möglich.

In einer Ausführungsform weist der Trägerkörper zwischen der Bohrung für das Drehlager und der Umfangsfläche einen Kanal auf, und der Rillenkörper eine mit diesem Kanal fluchtende beziehungsweise in Verbindung stehende Öffnung. Durch eine derartige Konstruktion kann in ein in der Bohrung liegendes Drehlager von der umfänglichen Außenoberfläche der Seilrolle her geschmiert werden, indem Schmieröl oder Schmierfett durch die Öffnung in den Kanal eingebracht oder eingepresst wird (beispielsweise durch eine Fettpresse) und aktiv oder passiv an das Drehlager gefördert wird. Der Kanal kann beispielsweise als Schlauch ausgebildet sein und kann in einer Ausführungsform in radialer Richtung innerhalb der Seilrolle verlaufen. Die Öffnung kann offen oder verschließbar sein beziehungsweise ein Ventil aufweisen. In einer Ausführungsform weist die Öffnung einen versenkten Schmiernippel oder ähnliches auf.

Die Erfindung betrifft ferner die Verwendung einer erfindungsgemäßen Seilrolle zur Führung und/oder Umlenkung von Seilen, insbesondere von Hubseilen und/oder Einziehseilen eines Krans oder Baggers.

Letztlich betrifft die Erfindung einen Kran oder Bagger mit wenigstens einer erfindungsgemäßen Seilrolle.

Dabei sind sowohl stationäre Wippkräne wie z. B. schnelle Einsatzkräne oder Obendreh-Krane sowie auch Mobilkrane mit einem Fahrgestell, einer Karosserie und einem Kranarm, welcher einen Ausleger und gegebenenfalls einen Stiel aufweist, umfasst. Die erfindungsgemäßen Seilrollen sind beispielsweise am Ausleger, an der Spitze des Auslegers oder auch an stationären Teilen der Krane angebracht. Stationäre Teile der Krane umfassen beispielsweise die Karosserie bei Mobilkranen oder den Turm oder Boden bei stationären Kranen. Die Seilrollen dienen dabei zur Führung von Einziehseilen bei beispielsweise einer Winkelverstellung des Auslegers oder zur Führung von Hubseilen beziehungsweise zur Umlenkung in Zugrichtung.

Durch den Einsatz von Leichtbauteilen wie der erfindungsgemäßen Seilrolle ergibt sich bei diesen Geräten eine Energieersparnis bei deren Betrieb und Transport. Ferner sind leichte Geräte universeller einsetzbar. Eine Gewichtsersparnis von am Ausleger befindlichen Teilen geht zudem direkt zu Gunsten der Nutzlast. Ein besonderer Vorteil ergibt sich dadurch, dass durch das geringere Gewicht der Seilrollen, die an dem Ausleger befestigt sind, ein längerer Ausleger aufgerichtet werden kann, und dass bei baugleichen Geräten längere Ausleger zum Einsatz kommen können, ohne dass ein größeres Gegengewicht erforderlich ist.

Weitere Einzelheiten und Vorteile der Erfindung ergeben sich aus den folgenden Figuren und Ausführungsbeispielen. Die Figuren zeigen:
- Figur 1:: eine Explosionsdarstellung einer erfindungsgemäßen Seilrolle,
- Figur 2:: Querschnittsdarstellungen von drei verschiedenen Ausführungsformen einer erfindungsgemäßen Seilrolle und
- Figur 3:: perspektivische Ansichten zweier Ausführungsformen einer erfindungsgemäßen Seilrolle.

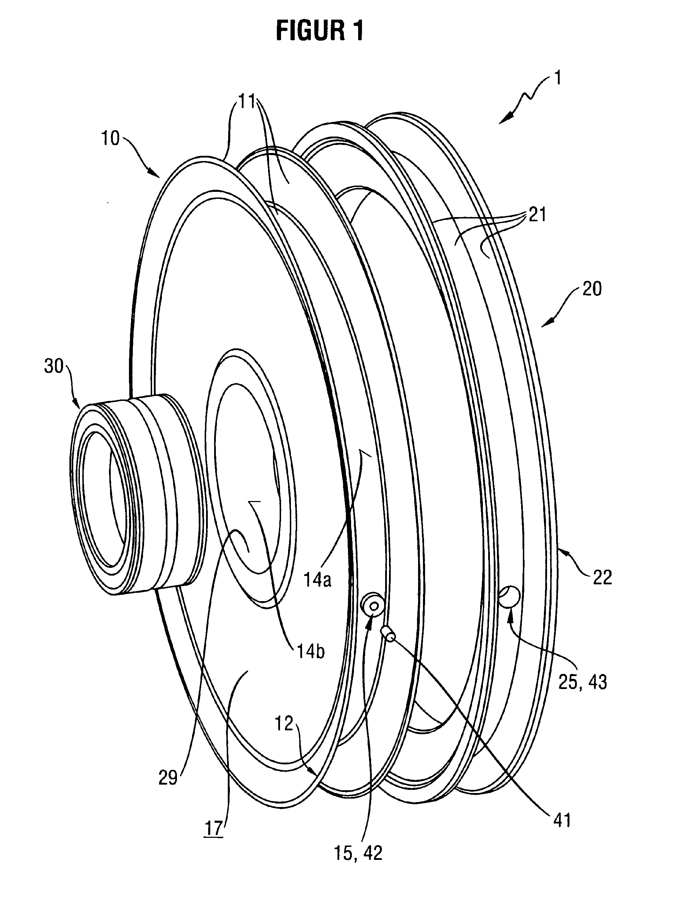

In Figur 1 ist eine Ausführungsform einer erfindungsgemäßen Seilrolle 1 in Explosionsdarstellung gezeigt.

Die Seilrolle 1 weist einen Trägerkörper 10 sowie einen Rillenkörper 20 auf. Der Trägerkörper 10 hat eine radförmige Gestalt, wobei sich im Mittelpunkt des Rades an dessen Drehachse eine Bohrung 29 befindet. In dieser Bohrung 29 ist ein Drehlager 30 angebracht.

Der Trägerkörper 10 wird durch zwei parallel zueinander laufende, runde Scheiben 17, einen Obergurt 14a und einen Untergurt 14b gebildet. Die Scheiben 17 erstrecken sich von der Bohrung 29 bis zur Umfangsfläche des Rades und stellen die seitlichen Begrenzungen des Trägerkörpers dar. Zwischen den parallelen Scheiben 17 kann ein Kern beziehungsweise Abstandshalter aus verschiedenen Materialien angebracht sein, beispielsweise ein Schubkern aus einem geschäumten Kunststoffmaterial oder eine ähnliche, schubsteife Verbindung. Alternativ oder zusätzlich kann sich im Zwischenraum zwischen den Scheiben 17 eine andere Struktur wie eine Hohlkammkonstruktion oder eine Fachwerkkonstruktion befinden.

Der Trägerkörper 10 weist entlang den beiden Randbereichen der Umfangsfläche eine umfänglich durchgehende Leiste 12 auf, die in der dargestellten Ausführungsform als eine Verlängerung der Scheiben 17 ausgebildet ist, die leicht nach außen gewölbt ist. Selbstverständlich sind auch gerade Verläufe denkbar. Die Umfangsfläche des Trägerkörpers beziehungsweise der Obergurt 14a bildet gemeinsam mit den Leisten 12 eine wannenförmige Ausnehmung, welche als Aufnahme für den Rillenkörper dient. Diese Aufnahme ist in Figur 1 mit den Bezugszeichen 11 bezeichnet.

Die Scheiben 17, der Obergurt 14a, der Untergurt 14b und die Leisten 12 des Trägerköpers 10 sind in der dargestellten Ausführungsform aus einem kohlefaserverstärktem Kunststoff gefertigt. Durch diese Materialwahl kann eine besonders leichtgewichtige Seilrolle hergestellt werden, die dennoch eine sehr hohe mechanische Stabilität und insbesondere Steifigkeit hat, wobei die Scheiben 17 die Normalspannung aufnehmen.

Der Rillenkörper 20 ist ringförmig und hat einen sichelförmigen Querschnitt. Die konvexe innere Manteloberfläche dieses Ringes passt formschlüssig in die Aufnahme 11 des Trägerkörpers. So stellt der Ringkörper 20 eine verlorene Form für den Trägerkörper 10 dar. An der äußeren Umfangsfläche des Ringes befindet sich eine wannenförmige Rille zur Führung eines Seils 21, die durch Boden des Ringes sowie durch die umfänglich durchgehend verlaufenden Leisten 22 gebildet wird. Wie die Leisten 12 des Trägerkörpers sind auch die Leisten 22 des Rillenkörpers in der dargestellten Ausführungsform leicht nach außen gebogen, wobei auch andere Ausrichtungen wie beispielsweise eine gerade Ausrichtung von der Erfindung umfasst sind. Der Rillenköper ist homogen aus Kunststoff gefertigt. Beispiele für geeignete Kunststoffmaterialien umfassen Gusspolyamid oder POM. Diese sind im Gegensatz zu Carbon unempfindlich gegenüber mechanischen Schlägen.

Auch die Verbindung zwischen dem Trägerkörper 10 und dem Rillenkörper 20, welche eine Verschiebung um die Drehachse verhindert, erfolgt im gezeigten Ausführungsbeispiel durch Formschluss. Zu diesem Zweck korrespondiert ein am Obergurt 14a des Trägerköpers 10 liegender Zapfen 15 mit einer Ausnehmung 25 im Boden des Rillenköpers 20, und bildet so einen Formschluss der ein Gleichlaufen des Trägerkörpers und des Rillenkörpers gewährleistet und eine Verschiebung gegeneinander unterbindet. Es können umfänglich auch mehrere Zapfen 15 und Ausnehmungen 25 oder vergleichbare zur Ausbildung eines Formschlusses geeignete Strukturen vorhanden sein. Dies ist in der Zeichnung jedoch nicht dargestellt.

Der Zapfen 15 dient gleichzeitig als Schmiernippel 42, der fluchtend mit der Öffnung 43 im Rillenköper 20 angeordnet ist, sodass dieser von der Rille 21 her zugänglich ist. So kann im Betriebszustand der erfindungsgemäßen Seilrolle, selbst wenn sich diese im Zentrum eines Rollenblocks befindet, das Drehlager 30 jederzeit geschmiert werden, ohne den Rollenblock trennen zu müssen.

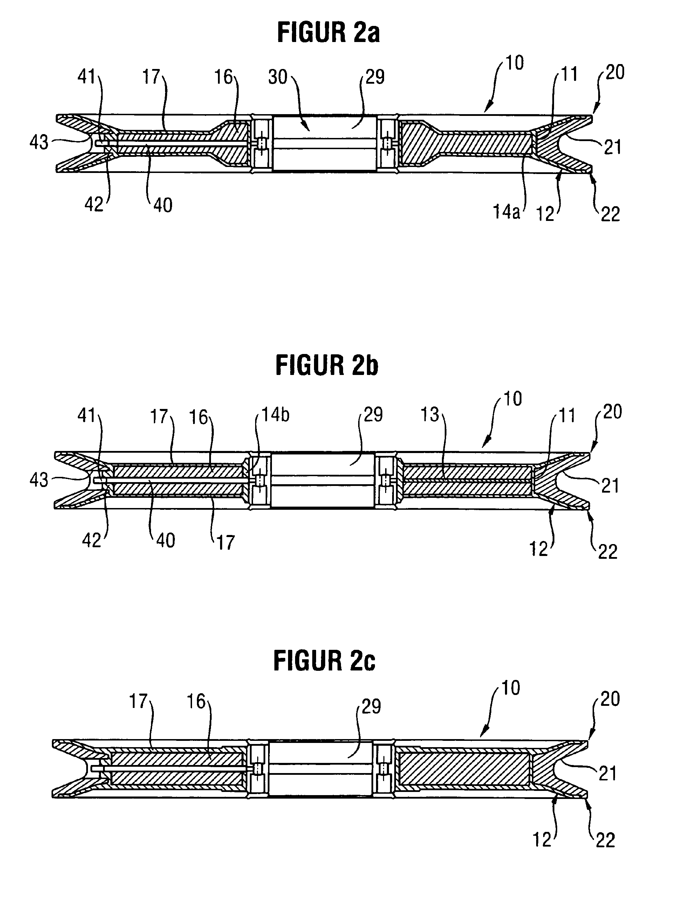

Figur 2a zeigt eine Ausführungsform einer erfindungsgemäßen Seilrolle im Querschnitt. Im Zentrum ist dabei die Ausnehmung 29 sichtbar, worin sich das Stabillager 30 befindet. Dieses wird umfänglich von dem Trägerköper 10 umgeben, welcher wiederum umfänglich vom Rillenkörper 20 umgeben ist.

In der in Figur 2a abgebildeten Ausführungsform ist der Trägerkörper 10 aus zwei parallel angeordneten Scheiben 17 gefertigt, die einen Schubkern 16 einschließen. Die Scheiben 17 erscheinen im Querschnitt nicht als eine gerade Linie, sondern sind in radialer Richtung strukturiert, sodass die Dicke des Trägerköpers den Randbereichen (bezogen auf die radiale Erstreckung des Trägerrades) größer ist als im mittleren Bereich. In der inneren und äußeren Endzone nahe Obergurt14a beziehungsweise Untergurt 14b weitet sich der Abstand zwischen den beiden Scheiben 17 verglichen mit der mittigen Verjüngung auf.

Am Obergurt 14a endet der Einschluss des Schubkerns 16, sodass der Endbereich der Scheiben 17 in Form von zwei an den Umfangsrändern des Trägerkörpers abstehenden Leisten 12 in Erscheinung tritt. Diese Leisten bilden gemeinsam mit dem Obergurt 14a die Ausnehmung 11, in der ein im Querschnitt sichelförmiger Rillenkörper aufgenommen ist. Dieser weist wiederum eine wannenförmige Rille 21 auf.

In seinem Inneren, d.h. zwischen den Scheiben 17 weist der Trägerköper 10 einen radial verlaufenden Kanal 40 auf, welcher sich von der Ausnehmung 29 bis zu einer Öffnung 42, beispielsweise einem Schmiernippel erstreckt. Der Kanal kann beispielsweise als Schlaub ausgebildet sein, der in das Kernmaterial eingebettet ist. Die Öffnung 42 ist in der gezeigten Darstellung mit Hilfe eines Verschlussmittels, beispielsweise eines Stöpsels oder einer Kappe 41 verschließbar. Der Eingang 42 fluchtet mit einer Öffnung 43 innerhalb des Rillenköpers, sodass diese von außen her zugänglich ist. So wird, wie zuvor beschrieben, ein Schmieren des Drehlagers 30 innerhalb der Bohrung 29 im Betriebszustand des Rades ermöglicht.

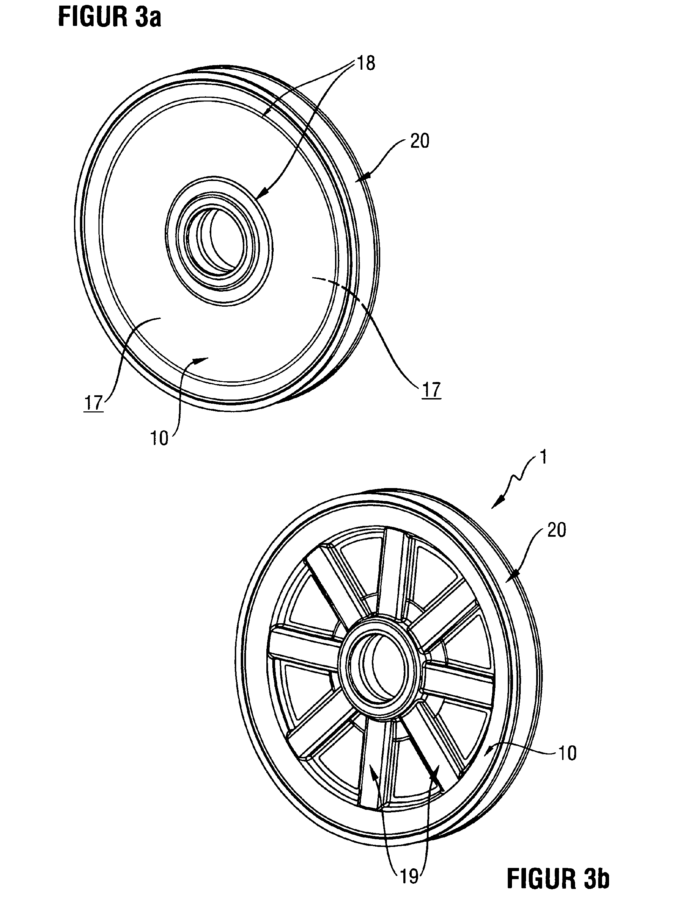

Die in Figur 2a im Querschnitt gezeigte Ausführungsform einer erfindungsgemäßen Seilrolle ist in Figur 3a in perspektivischer Ansicht dargestellt. Insbesondere ist dort zu erkennen, dass die Scheibe 17 eine Strukturierung aufweist, wobei sich die Stärke der Seilrolle an den Stellen 18 verändert. Diese Strukturierung kann eine Gewichtsersparnis sowie ein Stabilitätsgewinn mit sich bringen.

Ein Querschnitt durch eine weitere Ausführungsform einer erfindungsgemäßen Seilrolle ist in Figur 2b dargestellt. Zu Figur 2a korrespondierende Teile sind mit dem gleichen Bezugszeichen versehen und werden hier nicht gesondert beschrieben.

Ein wesentlicher Unterschied zu der Ausführungsform gemäß Figur 2a besteht hier darin, dass der Trägerköper 10 einen anderen Aufbau besitzt. In dieser Ausführungsform weist der Trägerkörper drei parallel verlaufende Scheiben aus Kompositmaterial auf, wovon zwei Scheiben 17 jeweils die Außenbegrenzung des Trägerköpers darstellen und eine zentral angeordnete Scheibe 13 als zusätzliche Verstärkung im Inneren dient. Alle drei Scheiben 13, 17 sind aus Kompositmaterial gefertigt. In den Zwischenräumen der Scheiben befindet sich ein Schaumkern 16.

Im weiteren Gegensatz zu der in Figur 2a dargestellten Ausführungsform sind die Scheiben 17 in radialer Richtung im Wesentlichen gerade, d. h. sie haben keinen gewölbten bzw. strukturieren Verlauf in diese Richtung. Dies gilt zumindest abschnittsweise.

Die in Figur 2b im Querschnitt dargestellte Ausführungsform einer erfindungsgemäßen Seilrolle ist in Figur 3b in perspektivischer Ansicht dargestellt. Dort ist erkennbar, dass die Scheiben 17 in gleichmäßigen Abständen in radialer Richtung Hohlspeichen 19 aufweisen beziehungsweise zu Hohlspeichen 19 ausgeformt sind, die dem Rad zusätzliche Stabilität gegen eine einwirkende Normalspannung verleihen. In den Zwischenräumen zwischen den Hohlspeichen 19 kann sich entweder eine Ausnehmung befinden, so dass der Kern 16 nach außen hin sichtbar ist, oder die Scheiben 17 können so gewölbt sein, dass die Speichen eine bloße Ausformung darstellen und die Scheibe weiterhin durchgehend gefertigt ist.

In Figur 2c ist eine weitere Ausführungsform einer erfindungsgemäßen Seilrolle im Querschnitt dargestellt. Der grundlegende Aufbau entspricht im Wesentlichen den in den Figuren 2a und 2b dargestellten Seilrollen und gleiche Bezugszeichen beziehen sich auf gleiche Teile. Diese Teile werden hier nicht erneut näher beschrieben.

Eine Besonderheit dieser Ausführungsform liegt wiederum im Aufbau des Trägerkörpers, der wiederum zwei parallele, den Trägerkörper nach außen hin begrenzenden Scheiben 17 aufweist. Diese haben, ähnlich der in den Figuren 2b und 3b dargestellten Ausführungsformen, ausgeformte Hohlspeichen, die jedoch im Unterschied zu der in Figur 2b gezeigten Ausführungsform im Inneren des Trägerkörpers 10 liegen und in ein Schaummaterial eingebettet sind. Somit sind die Scheiben 17 mit deren Speichen oder anderweitigen Strukturierungen nicht nach außen hin sichtbar, sodass diese gegen Schläge und dergleichen Außeneinflüsse geschützt sind.

## Patentansprüche

1. Seilrolle (1) mit einer umfänglich verlaufenden Rille (21) zur Führung eines Seils,
**dadurch gekennzeichnet,**
**dass** die Seilrolle (1) modular aufgebaut ist und einen radförmigen Trägerkörper (10) sowie einen ringförmigen Rillenkörper (20) aufweist, wobei der Trägerkörper (10) wenigstens abschnittsweise aus einem Compositmaterial, vorzugsweise einem faserverstärkten Kunststoff besteht, und wobei der Rillenkörper (20) den Trägerkörper (10) umfänglich umgibt und die Rille (21) aufweist.

2. Seilrolle gemäß Anspruch 1, **dadurch gekennzeichnet, dass** der Trägerkörper (10) heterogen gefertigt ist, wobei tragende Strukturelemente und/oder das Grundgerüst des Trägerkörpers (10) aus dem Compositmaterial bestehen.

3. Seilrolle gemäß einem der vorangehenden Ansprüche, **dadurch gekennzeichnet, dass** der Trägerkörper (10) wenigstens zwei parallel angeordnete Scheiben (17) aus dem Compositmaterial umfasst, die vorzugsweise einen Kern (16) aus einem anderen Material sandwichartig begrenzen und/oder in einem Mantel aus einem anderen Material eingefasst sind.

4. Seilrolle gemäß einem der vorangehenden Ansprüche, **dadurch gekennzeichnet, dass** der Kern (16) und/oder der Mantel aus einem Schaummaterial, insbesondere aus einem geschäumten Kunststoffmaterial bestehen.

5. Seilrolle gemäß Anspruch 3 oder 4, **dadurch gekennzeichnet, dass** wenigstens eine der parallel angeordneten Scheiben (17) radial verlaufende Hohlspeichen (19) aufweist, und gegebenenfalls Aussparungen in den Bereichen zwischen den Hohlspeichen (19) aufweist.

6. Seilrolle gemäß einem der vorangehenden Ansprüche, **dadurch gekennzeichnet, dass** der Rillenkörper (20) aus Kunststoff besteht.

7. Seilrolle gemäß einem der vorangehenden Ansprüche, **dadurch gekennzeichnet, dass** der Trägerkörper (10) umfänglich eine Aufnahme (11) für den Rillenkörper (20) aufweist.

8. Seilrolle gemäß einem der vorangehenden Ansprüche, **dadurch gekennzeichnet, dass** der Rillenkörper (20) im Querschnitt sichelförmig ist und vorzugsweise eine verlorene Form hinsichtlich der Aufnahme (11) im Trägerkörper (10) darstellt.

9. Seilrolle gemäß einem der vorangehenden Ansprüche, **dadurch gekennzeichnet, dass** der Rillenkörper (20) und der Trägerkörper (10) innerhalb der Seilrolle (1) ortsfest zueinander angeordnet sind und vorzugsweise formschlüssig verbunden sind.

10. Seilrolle gemäß einem der vorangehenden Ansprüche, **dadurch gekennzeichnet, dass** der Rillenkörper (10) untrennbar im Trägerkörper (10) integriert ist.

11. Seilrolle gemäß einem der vorangehenden Ansprüche, **dadurch gekennzeichnet, dass** der Trägerkörper (10) entlang dessen Drehachse eine Bohrung (29) aufweist, in der ein Drehlager (30) anbringbar ist.

12. Seilrolle gemäß Anspruch 11, **dadurch gekennzeichnet, dass** der Trägerkörper (10) einen Kanal (40) zwischen der Bohrung (29) und dem Umfang aufweist und der Rillenkörper (20) eine mit diesem Kanal (40) in Verbindung stehende Öffnung (43) aufweist.

13. Verwendung einer Seilrolle gemäß einem der Ansprüche 1 bis 12 zur Führung und/oder Umlenkung von Seilen, insbesondere Hubseilen und/oder Einzeihseilen eines Krans oder Baggers.

14. Kran oder Bagger mit wenigstens einer Seilrolle gemäß einem der Ansprüche 1 bis 12.
